# EUROPEAN PATENT APPLICATION

(11) **EP 2 821 915 A2**
(43) Date of publication of application: **07.01.2015**
(21) Application number: 13794209.0
(22) Date of filing: 24.07.2013
(51) Int. Cl.: G06F 3/14

(54) **METHOD AND APPARATUS FOR CONTROLLING DISPLAY OF SHARED SCREEN**

(30) Priority: 28.02.2013 CN 201310066282
(71) Applicant: ZTE Corporation, Guangdong Province 518057 (CN)
(72) Inventor: XIAO, Longan, Shenzhen Guangdong Province 518057 (CN)
(74) Representative: Novagraaf Technologies
(86) International application number: PCT/CN2013/079983
(87) International publication number: WO 2013/174332

(57) **Abstract**

The present invention provides a method and an device for controlling display of a shared screen. The above method comprises: a source terminal displays a shared screen and a screen of a sink terminal on a screen of the source terminal in a preset proportion according to first shared screen display information from the sink terminal, wherein the first shared screen display information can indicate a first display area of the shared screen on the screen of the sink terminal; the source terminal generates second shared screen display information according to the first shared screen display information and adjustment operation information currently input by a user, wherein the second shared screen display information is used for indicating a second display area of the shared screen on the screen of the sink terminal; and the source terminal sends the second shared screen display information to the sink terminal. By adopting the above technical solutions provided in the present invention, a user directly adjusts a position of a shared screen on a screen of a sink terminal very conveniently by operating a source terminal.

## Description

### TECHNICAL FIELD

The present invention relates to the field of communications, in particular to a method and device for controlling displaying of a shared screen.

### BACKGROUND

With the diversification and popularity of various intelligent display terminals, especially the wide use of mobile intelligent terminals, notebook computer, intelligent televisions, and the development of high-speed Wifi-related technology, high-definition real-time screen sharing between intelligent mobile terminals and televisions and computers is more and more mature. Screen sharing and interaction refer to sharing and interaction of screen, media content information, etc. between devices based on various terminals, such as devices with a screen display function like a smart phone, a PC, a television, etc., so as to satisfy the demand of a user to conveniently browse a webpage, play and view media, play a game and operate a terminal on different types of terminals.

However, due to the difference of screen size or resolution, etc. between various display terminals, when a sink terminal displays a shared screen of a source terminal, a display position thereof may generally be fixed at a certain position, and it is inconvenient for a user to adjust the display position. In particular, when multiple source terminals connect to one sink terminal for screen sharing and multiple shared screens need to be displayed on the same display screen, a user may hardly adjust positions of shared screens of several source terminals on the display screen of the sink terminal to obtain better experience.

With regard to the problem in the related art that a user may hardly adjust positions of multiple shared screens on the display screen of the sink terminal, there is no effective solution proposed yet currently.

### SUMMARY

The embodiments of the present invention provide a method and device for controlling display of a shared screen, so as to at least solve the problem above.

According to one embodiment of the present invention, a method for controlling display of a shared screen is provided, comprising: a source terminal displaying a shared screen and a screen of a sink terminal on a screen of the source terminal in a preset proportion according to first shared screen display information from the sink terminal, wherein the first shared screen display information may indicate a first display area of the shared screen on the screen of the sink terminal; the source terminal generating second shared screen display information according to the first shared screen display information and adjustment operation information currently input by a user, wherein the second shared screen display information is used for indicating a second display area of the shared screen on the screen of the sink terminal; and the source terminal sending the second shared screen display information to the sink terminal.

Preferably, the first shared screen display information comprises: a screen size of the screen of the sink terminal; and first display position information about the shared screen on the screen of the sink terminal.

Preferably, the second shared screen display information comprises: second display position information used for indicating display of the shared screen, of which a display position has been adjusted, on the screen of the sink terminal; and/or a size used for indicating the shared screen, of which a screen size has been adjusted, on the screen of the sink terminal; and/or a size proportion value used for indicating the shared screen, of which a screen size has been adjusted, to the screen of the sink terminal.

Preferably, after the source terminal sends the second display position information to the sink terminal, the method further comprises: the sink terminal determining the second display area on the screen of the sink terminal according to the second display position information; and the sink terminal displaying the shared screen on the second display area.

Preferably, the number of the shared screens is multiple.

According to another embodiment of the present invention, a device for controlling display of a shared screen is provided, comprising: a display module, configured to display a shared screen and a screen of a sink terminal on a screen of the source terminal in a preset proportion according to first shared screen display information from the sink terminal, wherein the first shared screen display information may indicate a first display area of the shared screen on the screen of the sink terminal; a generation module, configured to generate second shared screen display information according to the first shared screen display information and adjustment operation information currently input by a user, wherein the second shared screen display information is used for indicating a second display area of the shared screen on the screen of the sink terminal; and a sending module, configured to send the second shared screen display information to the sink terminal.

Preferably, the first shared screen display information comprises: a screen size of the screen of the sink terminal; and first display position information about the shared screen on the screen of the sink terminal.

Preferably, the second shared screen display information comprises: second display position information used for indicating display of the shared screen, of which a display position has been adjusted, on the screen of the sink terminal; and/or a size used for indicating the shared screen, of which a screen size has been adjusted, on the screen of the sink terminal; and/or a size proportion value used for indicating the shared screen, of which a screen size has been adjusted, to the screen of the sink terminal.

Preferably, the device further comprises a determination module configured to determine the second display area on the screen of the sink terminal according to the second display position information; and a display module configured to display the shared screen on the second display area.

Preferably, the number of the shared screens is multiple.

By means of the embodiments of the present invention, a display condition that a shared screen have already been on a screen of a sink terminal is fed back to a screen of a source terminal, and a user directly adjusts on the screen of the source terminal the display condition of the shared screen on the screen of the sink terminal, then sends relevant information about the adjusted display condition to the screen of the sink terminal, the problem in the related art that a user may hardly adjust positions of multiple shared screens on the display screen of the sink terminal is solved, thereby achieving the effects of a user directly adjusting a position of a shared screen on a screen of a sink terminal very conveniently by operating a source terminal, bringing about better user experience to multi-screen sharing interaction, and satisfying diversification application requirements.

### BRIEF DESCRIPTION OF THE DRAWINGS

Drawings, provided for further understanding of the present invention and forming a part of the specification, are used to explain the present invention together with embodiments of the present invention rather than to limit the present invention, wherein
Fig. 1 is a flowchart showing a method for controlling display of a shared screen according to an embodiment of the present invention;
Fig. 2A is a schematic diagram showing a shared screen is displayed on a screen of a sink terminal according to a preferred embodiment of the present invention;
Fig. 2B is a schematic diagram showing two shared screens are displayed on a screen of a sink terminal according to a preferred embodiment of the present invention;
Fig. 3A is a schematic diagram showing a display situation that a shared screen is displayed on a screen of a sink terminal is fed back and displayed on a screen of a source terminal according to a preferred embodiment of the present invention;
Fig. 3B is a schematic diagram showing display situations that two shared screens are displayed on a screen of a sink terminal are fed back and displayed respectively on screens of two source terminals according to a preferred embodiment of the present invention;
Fig. 4 is a schematic diagram showing after a display situation that a shared screen is displayed on a screen of a sink terminal is fed back and displayed on a screen of a source terminal, the display situation, of which a position has been adjusted by a user, is displayed on the screen of the sink terminal again according to a preferred embodiment of the present invention;
Fig. 5 is a schematic diagram showing, after a display situation that a shared screen is displayed on a screen of a sink terminal is fed back and displayed on a screen of a source terminal, the display situation, of which position and size have been adjusted by a user simultaneously, is displayed on the screen of the sink terminal again according to a preferred embodiment of the present invention;
Fig. 6 is a structural block diagram of a device for controlling display of a shared screen according to an embodiment of the present invention; and
Fig. 7 is a structural block diagram of a device for controlling display of a shared screen according to a preferred embodiment of the present invention.

### DESCRIPTION OF EMBODIMENTS

The present invention is described below with reference to the accompanying drawings and embodiments in detail. Note that, the embodiments of the present invention and the features of the embodiments may be combined with each other if there is no conflict.

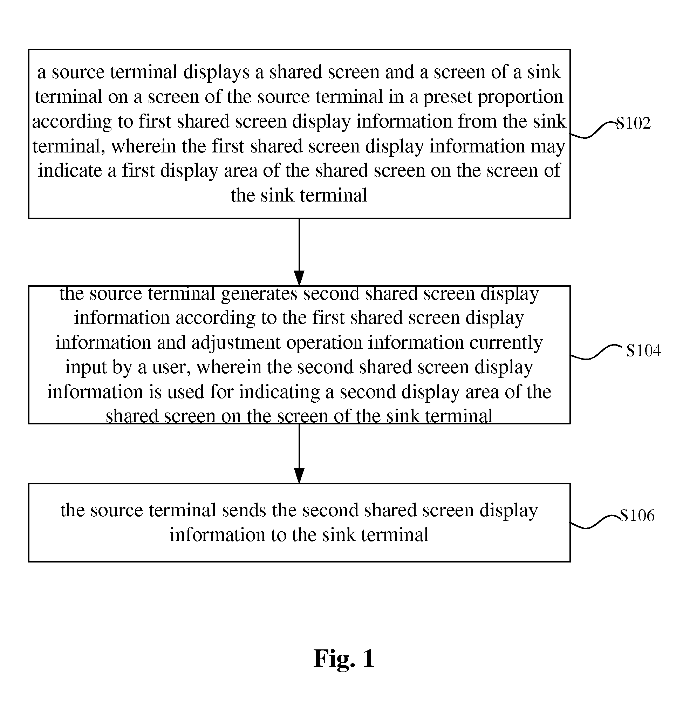

Fig. 1 is a flowchart of a method for controlling display of a shared screen according to an embodiment of the present invention. As shown in Fig. 1, the method mainly comprises the following steps (step S102-step S106):
step S102, a source terminal displays a shared screen and a screen of a sink terminal on a screen of the source terminal in a preset proportion according to first shared screen display information from the sink terminal, wherein the first shared screen display information may indicate a first display area of the shared screen on the screen of the sink terminal;
step S104, the source terminal generates second shared screen display information according to the first shared screen display information and adjustment operation information currently input by a user, wherein the second shared screen display information is used for indicating a second display area of the shared screen on the screen of the sink terminal; and
step S106, the source terminal sends the second shared screen display information to the sink terminal.

In this embodiment, the first shared screen display information comprises: a screen size of the screen of the sink terminal; and first display position information about the shared screen on the screen of the sink terminal.

In this embodiment, the second shared screen display information comprises: second display position information used for indicating display of the shared screen, of which a display position has been adjusted, on the screen of the sink terminal; and/or a size used for indicating a screen size of the shared screen, which has been adjusted, on the screen of the sink terminal; and/or a size proportion value used for indicating a ratio of the shared screen, of which a screen size has been adjusted, to the screen of the sink terminal.

In this embodiment, after the source terminal sends the second display position information to the sink terminal, the method further comprises: the sink terminal determines the second display area on the screen of the sink terminal according to the second display position information; and the sink terminal displays the shared screen on the second display area.

In this embodiment, the number of the shared screens is multiple.

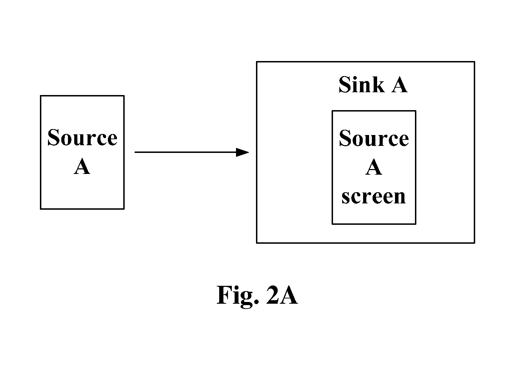

The method for controlling display of the shared screen provided by the method embodiment above will be described in further detail below in combination with Fig. 2A, Fig. 2B, Fig. 3A, Fig. 3B, Fig. 4 and Fig. 5 and preferred embodiments.

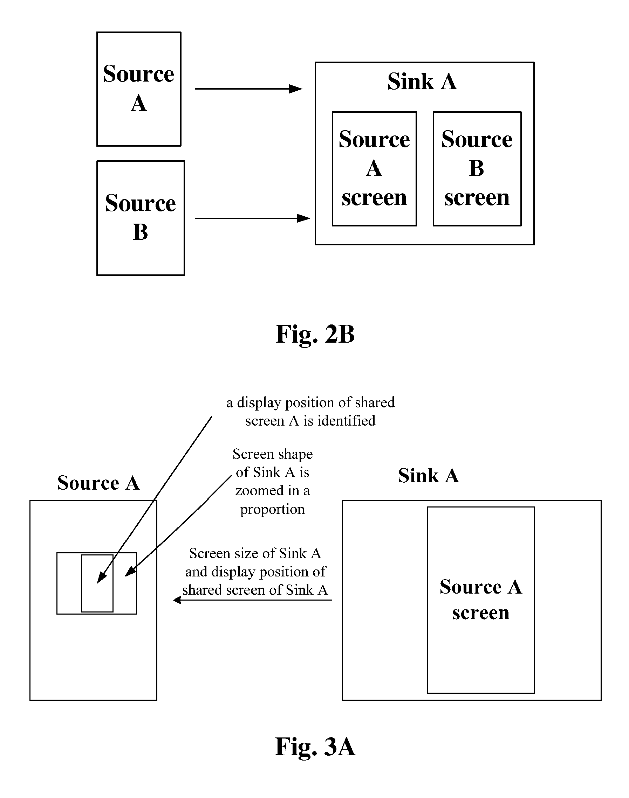

In the preferred embodiments, the implementation of screen sharing and interaction is mainly accomplished by means of a source terminal (Source) and a sink terminal (Sink). Firstly, the source terminal transmits a screen picture to the sink terminal in a wireless manner, and after receiving the screen picture of the source terminal, the sink terminal displays same on a screen thereof, thereby achieving screen sharing from the source terminal to the sink terminal. Please refer to Fig. 2A and Fig. 2B here. Fig. 2A is a schematic diagram showing a shared screen is displayed on a screen of a sink terminal according to a preferred embodiment of the present invention, and Fig. 2B is a schematic diagram showing two shared screens are displayed on a screen of a sink terminal according to a preferred embodiment of the present invention.

In practical applications, a preferred embodiment mainly comprise the following two parts:

### 1. a position of a shared screen is presented on a source terminal.

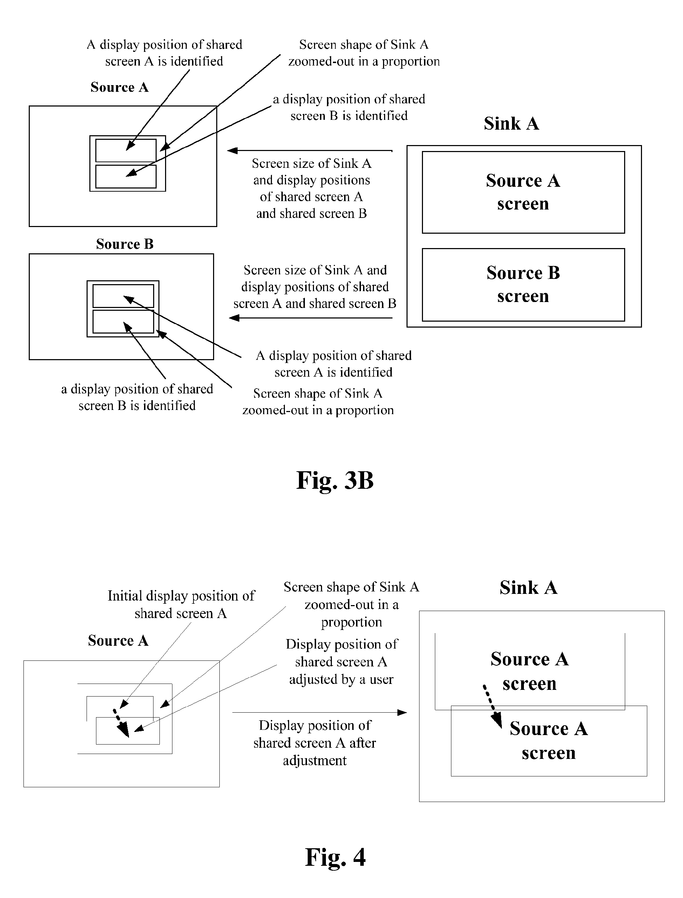

In screen sharing, after the source terminal shares a screen thereof to the sink terminal for displaying, position information that a shared screen of the current source terminal is displayed on a display screen of the sink terminal is presented to a user on the source terminal for the user to perform an adjust operation, which is mainly achieved by the following steps:
(1) after the source terminal shares the screen to the sink terminal for displaying, the sink terminal acquires position information about the shared screen of the source terminal, wherein the shared screen is displayed on the display screen of the sink terminal, and sends the position information and a screen size of the sink terminal to the source terminal;
(2) after receiving a message sent from the sink terminal, the source terminal draws a sink terminal screen shape which is zoomed in a proportion according to the screen size of the sink terminal, and identifies a position of the shared screen on the sink terminal screen shape which is zoomed in a proportion according to position information, which is about the shared screen on the source terminal, in the message; please refer to Fig. 3A , and Fig. 3A is a schematic diagram showing a display situation that a shared screen is displayed on a screen of a sink terminal is displayed on a screen of a source terminal according to a preferred embodiment of the present invention; and
(3) With regard to the case where screens of multiple source terminals are shared onto the screen of the same sink terminal, in the information sent by the sink terminal, position information about shared screens of all the source terminals is included. As regards each connected source terminal, after receiving the message, positions of shared screens of all the source terminals are identified to a user. Please refer to Fig. 3B here. Fig. 3B is a schematic diagram showing display situations that two shared screens are displayed on a screen of a sink terminal are fed back and displayed respectively on screens of two source terminals according to a preferred embodiment of the present invention. As shown in Fig. 3B, two source terminals share to one sink terminal.

### 2. A user adjusts the position of the shared screen on the source terminal (the case of only adjusting a shared screen position).

After the sink terminal display screen shape which is zoomed in a proportion and the identified shared screen position are displayed on the source terminal, a user may operate the sink terminal display screen shape which is zoomed in a proportion and shared screen position identification on the source terminal to control the position of the shared screen displayed on the display screen of the sink terminal, which is mainly achieved by the following steps:
(1) as regards the sink terminal screen shape which is zoomed in a proportion and shared screen identification which are displayed on the source terminal, a user may move the shared screen position identification within a screen shape range which is zoomed in the same proportion on the source terminal;
(2) the source terminal sends position information about the moved shared screen identification to the sink terminal, and the position of the shared screen identification on the sink terminal screen shape which is zoomed in the same proportion is updated according to the user's move; and
(3) after receiving a message sent by the source terminal, the sink terminal displays a corresponding shared screen on a new position area of the display screen according to the position information about the new shared screen identification.

As regards the process, please refer to Fig. 4. Fig. 4 is a schematic diagram showing after a display situation that a shared screen is displayed on a screen of a sink terminal is fed back and displayed on a screen of a source terminal, the display situation, of which a position has been adjusted by a user, is displayed on the screen of the sink terminal again according to a preferred embodiment of the present invention. The implementation of this process is completely illustrated in Fig. 4.

### 3. A user adjusts a position and a size of the shared screen on a source terminal (the case of simultaneously adjusting a shared screen position and size).

On the source terminal, after the sink terminal display screen shape which is zoomed in a proportion and the identified shared screen position are displayed, a user may operate the sink terminal screen shape which is zoomed in a proportion and shared screen position identification on the source terminal to control the position and size of the shared screen displayed on the sink terminal display screen, which is mainly achieved by the following steps:
(1) as regards the sink terminal screen shape which is zoomed in a proportion and shared screen identification which are displayed on the source terminal, a user may move and zoom out (of source, in practical applications, it may also be zoomed in) the shared screen position identification within a screen shape range which is zoomed in the same proportion on the source terminal;
(2) the source terminal sends position information about the moved and zoomed-out shared screen identification to the sink terminal, and the position of the shared screen identification is updated on the sink terminal screen shape which is zoomed in the same proportion according to the user's move and zoom-out; and
(3) after receiving a message sent by the source terminal, the sink terminal displays a corresponding shared screen on a new position area of the display screen according to the position information and size about the new shared screen identification.

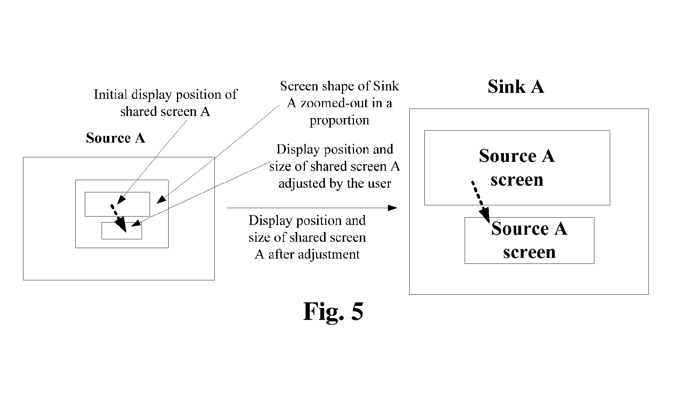

As regards the process, please refer to Fig. 5. Fig. 5 is a schematic diagram showing, after a display situation that a shared screen is displayed on a screen of a sink terminal is fed back and displayed on a screen of a source terminal, the display situation, of which position and size have been adjusted by a user simultaneously, is displayed on the screen of the sink terminal again according to a preferred embodiment of the present invention. The implementation of this process is completely illustrated in Fig. 5.

It needs to be noted that in practical applications, when a user adjusts a shared screen on a screen of a source terminal, a size of the shared screen may only be adjusted. Since the adjustment process is similar to Fig. 4 or Fig. 5, it will not be described redundantly here.

By applying the method for controlling display of a shared screen provided by the embodiments above, the problem in the related art that a user may hardly adjust positions of multiple shared screens on the display screen of the sink terminal is solved, thereby achieving the effects of a user directly adjusting a position of a shared screen on a screen of a sink terminal very conveniently by operating a source terminal, bringing about better user experience to multi-screen sharing interaction, and satisfying diversification application requirements.

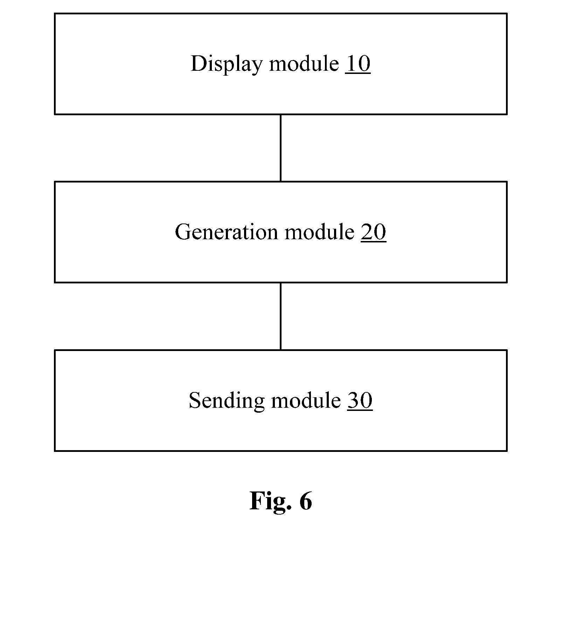

Fig. 6 is a structural block diagram of a device for controlling display of a shared screen according to an embodiment of the present invention. The device is used for implementing the method for controlling display of a shared screen provided by the embodiments above. As shown in Fig. 6, the device mainly comprises: a display module 10, a generation module 20 and a sending module 30. The display module 10 is configured to display a shared screen and a screen of a sink terminal on a screen of the source terminal in a preset proportion according to first shared screen display information from the sink terminal, wherein the first shared screen display information may indicate a first display area of the shared screen on the screen of the sink terminal; the generation module 20 is configured to generate second shared screen display information according to the first shared screen display information and adjustment operation information currently input by a user, wherein the second shared screen display information is used for indicating a second display area of the shared screen on the screen of the sink terminal; and the sending module 30 is configured to send the second shared screen display information to the sink terminal.

In this embodiment, the first shared screen display information comprises: a screen size of the screen of the sink terminal; and first display position information about the shared screen on the screen of the sink terminal.

In this embodiment, the second shared screen display information comprises: second display position information used for indicating display of the shared screen on the screen of the sink terminal after a display position of the shared screen is adjusted; and/or a size used for indicating a size of the shared screen on the screen of the sink terminal after a screen size of the shared screen is adjusted; and/or a size proportion value used for indicating a size proportion value of the shared screen to the screen of the sink terminal after a screen size of the shared screen is adjusted.

In this embodiment, the number of the shared screens is multiple.

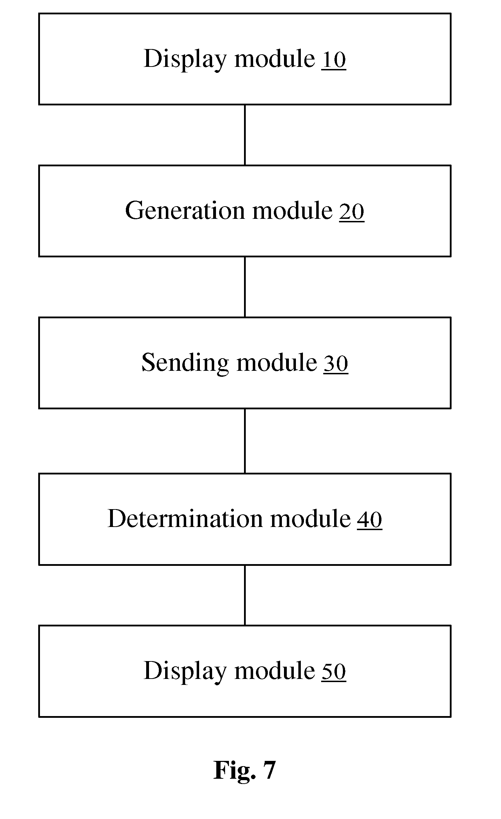

Fig. 7 is a structural block diagram of a device for controlling display of a shared screen according to a preferred embodiment of the present invention. As shown in Fig. 7, in this preferred embodiment, the device may further comprise: a determination module 40, configured to determine a second display area on the screen of the sink terminal according to the second display position information; and a display module 50, configured to display the shared screen on the second display area.

By applying the device for controlling display of a shared screen provided by the embodiments above, the problem in the related art that a user may hardly adjust positions of multiple shared screens on the display screen of the sink terminal is solved, thereby achieving the effects of a user directly adjusting a position of a shared screen on a screen of a sink terminal very conveniently by operating a source terminal, bringing about better user experience to multi-screen sharing interaction, and satisfying diversification application requirements.

From the description above, it can be seen that the present invention achieves the following technical effects: in the scenario of screen sharing, a user may directly control a display position of a shared screen of a source terminal (Source) on a display screen of a sink terminal (Sink) via the source terminal; in addition, the sink terminal may transmit display screen size information thereabout to the source terminal, and then the source terminal displays a screen size of the sink terminal and a position of the shared screen on the screen in a zooming proportion, and thus it may be convenient for the user to adjust the display position of the shared screen of the source terminal on the display screen of the sink terminal via the source terminal. In such manner, better experience and diversified applications may be brought about for display and user interaction when screen sharing, thereby achieving the effects of a user directly adjusting a position of a shared screen on a screen of a sink terminal very conveniently by operating a source terminal, bringing about better user experience to multi-screen sharing interaction, and satisfying diversification application requirements.

Obviously, those skilled in the art should know that each of the mentioned modules or steps of the present invention may be realized by universal computing devices; the modules or steps may be focused on single computing device, or distributed on the network formed by multiple computing devices; selectively, they may be realized by the program codes which may be executed by the computing device; thereby, the modules or steps may be stored in the storage device and executed by the computing device; and under some circumstances, the shown or described steps may be executed in different orders, or may be independently manufactured as each integrated circuit module, or multiple modules or steps thereof may be manufactured to be single integrated circuit module, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. Any modification, equivalent replacement, or improvement made within the spirit and principle of the present invention shall all fall within the protection scope of the present invention.

## Claims

1. A method for controlling display of a shared screen, **characterized by** comprising:
a source terminal displaying a shared screen and a screen of a sink terminal on a screen of the source terminal in a preset proportion according to first shared screen display information from the sink terminal, wherein the first shared screen display information can indicate a first display area of the shared screen on the screen of the sink terminal;
the source terminal generating second shared screen display information according to the first shared screen display information and adjustment operation information currently input by a user, wherein the second shared screen display information is used for indicating a second display area of the shared screen on the screen of the sink terminal; and
the source terminal sending the second shared screen display information to the sink terminal.

2. The method according to claim 1, **characterized in that** the first shared screen display information comprises:
a screen size of the screen of the sink terminal; and
first display position information about the shared screen on the screen of the sink terminal.

3. The method according to claim 1 or 2, **characterized in that** the second shared screen display information comprises:
second display position information used for indicating display of the shared screen, of which a display position has been adjusted, on the screen of the sink terminal; and/or
a size used for indicating a screen size of the shared screen, which has been adjusted, on the screen of the sink terminal; and/or
a size proportion value used for indicating a ratio of the shared screen, of which a screen size has been adjusted, to the screen of the sink terminal.

4. The method according to claim 3, **characterized in that** after the source terminal sends the second display position information to the sink terminal, the method further comprises:
the sink terminal determining the second display area on the screen of the sink terminal according to the second display position information; and
the sink terminal displaying the shared screen on the second display area.

5. The method according to claim 4, **characterized in that** the number of the shared screens is multiple.

6. An device for controlling display of a shared screen, **characterized by** comprising:
a display module configured to display a shared screen and a screen of a sink terminal on a screen of the source terminal in a preset proportion according to first shared screen display information from the sink terminal, wherein the first shared screen display information can indicate a first display area of the shared screen on the screen of the sink terminal;
a generation module configured to generate second shared screen display information according to the first shared screen display information and adjustment operation information currently input by a user, wherein the second shared screen display information is used for indicating a second display area of the shared screen on the screen of the sink terminal; and
a sending module configured to send the second shared screen display information to the sink terminal.

7. The device according to claim 6, **characterized in that** the first shared screen display information comprises:
a screen size of the screen of the sink terminal; and
first display position information about the shared screen on the screen of the sink terminal.

8. The device according to claim 6 or 7, **characterized in that** the second shared screen display information comprises:
second display position information used for indicating display of the shared screen, of which a display position has been adjusted, on the screen of the sink terminal; and/or
a size used for indicating a screen size of the shared screen, which has been adjusted, on the screen of the sink terminal; and/or
a size proportion value used for indicating a ratio of the shared screen, of which a screen size has been adjusted, to the screen of the sink terminal.

9. The device according to claim 8, **characterized in that** the device further comprises:
a determination module configured to determine the second display area on the screen of the sink terminal according to the second display position information; and
a display module configured to display the shared screen on the second display area.

10. The device according to claim 8, **characterized in that** the number of the shared screens is multiple.
